# EUROPÄISCHE PATENTSCHRIFT

(11) **EP 1 373 006 B1**
(45) Veröffentlichungstag und Bekanntmachung des Hinweises auf die Patenterteilung: **01.09.2004**
(21) Anmeldenummer: 02716767.5
(22) Anmeldetag: 13.02.2002
(51) Int. Cl.: B60K 37/00

(54) **VERFAHREN UND VORRICHTUNG ZUR AUSGABE VON DATEN ÜBER EINE INFORMATION EINES KRAFTFAHRZEUGS**
METHOD AND DEVICE FOR ISSUING DATA RELATED TO INFORMATION CONCERNING A MOTOR VEHICLE
PROCEDE ET DISPOSITIF PERMETTANT DE FOURNIR DES DONNEES CONCERNANT UNE INFORMATION RELATIVE A UNE AUTOMOBILE

(30) Priorität: 06.04.2001 DE 10117410
(43) Veröffentlichungstag der Anmeldung: 02.01.2004
(73) Patentinhaber: DaimlerChrysler AG, 70567 Stuttgart (DE)
(72) Erfinder: ENIGK, Holger, 15834 Rangsdorf (DE); HOFFMANN, Daniel, 71069 Sindelfingen (DE); HOFMANN, Peter, 71120 Grafenau (DE); LEBOCH, Stefan, 72124 Pliezhausen (DE); LUDWIG, Michaela, 73734 Esslingen (DE); NAGEL, Gerhard, 71116 Gärtingen (DE); PAZDA, Katrin, 71348 Weinstadt (DE); ROTHE, Siegfried, 73770 Denkendorf (DE); SCHATTENBERG, Kay, 70327 Stuttgart (DE); STEFFENS, Christiane, 10967 Berlin (DE); STRAUB, Bernhard, 72181 Starzach (DE); VON HASSELN, Hermann, 73732 Esslingen (DE); WOLF, Michael, 70180 Stuttgart (DE)
(86) Internationale Anmeldenummer: PCT/EP2002/001485
(87) Internationale Veröffentlichungsnummer: WO 2002/081251

(56) Entgegenhaltungen:
- EP-A- 0 499 567
- WO-A-97/34388
- DE-A- 19 627 923
- US-A- 6 009 355

## Beschreibung

Die Erfindung bezieht sich auf ein Verfahren zur Ausgabe von Daten über eine Information eines Kraftfahrzeugs für einen Nutzer und auf eine entsprechende Vorrichtung.

Die WO 98/34812 beschreibt ein multimediales Informations- und Kontrollsystem für ein Automobil. Dabei wählt der Nutzer aus einer vorgegebenen Gesamtmenge die ihn interessierende Information aus. Anschließend werden ihm verschiedene Optionen für die Information vorgegeben, aus denen er wenigstens eine Option auswählen und sich die betreffenden Daten ausgeben lassen kann. Weiterhin kann eine den ausgegebenen Daten entsprechende Bedienfunktion ausgeführt werden.

Der Erfindung liegt die Aufgabe zugrunde, das Verfahren und die Vorrichtung der WO 98/34812 derart weiter zu verbessern, dass der Bedienkomfort für den Nutzer erhöht und die Bedien- und die Verkehrssicherheit gesteigert wird.

Diese Aufgabe wird erfindungsgemäß bezüglich des Verfahrens durch die Merkmale des Anspruchs 1 und bezüglich der Vorrichtung durch die Merkmale des Anspruchs 11 gelöst. Die Unteransprüche betreffen vorteilhafte Aus- und Weiterbildungen der Erfindung.

Der Hauptgedanke der Erfindung besteht darin, die Art und die Anzahl der zu der Information generierten Optionen und die Ausgabe der betreffenden Daten abhängig von zumindest einem kontextabhängigen Profil vorzunehmen und dem Nutzer damit' einen schnellen und einfachen Zugriff auf weitergehende, d.h. die einzelne Information näher beschreibende Daten anzubieten. Dabei bezeichnet das Wort Information einen Oberbegriff, unter dem verschiedene Daten zusammengefasst werden können, wie beispielsweise "Scheibenwischer". Die Daten über die Information sind zugeordnete, in einem Speicher abgelegte Angaben, die auf unterschiedliche Art für den Nutzer ausgegeben werden können - beim "Scheibenwischer" z.B. ein Einführungsvideo zur Bedienung oder eine akustische Kurzerklärung der Intervallstufen. Das kontextabhängige Profil betrifft beim Zusammenwirken von Fahrzeug, Nutzer und Umgebung die Charakterisierung wenigstens eines mitwirkenden Aspekts, z.B. das Lebensalter des Nutzers. Anhand des kontextabhängigen Profils werden die der Information zugehörigen Optionen derart aufbereitet, dass aus einer Gesamtmenge von Optionen nur diejenigen generiert werden, die dem kontextabhängigen Profil zuzuordnen sind.

Darüber hinaus kann durch Verwendung des kontextabhängigen Profils auch eine selbsttätige Ausgabe von Daten ohne die vorherige Auswahl einer Option durch den Nutzer erfolgen. Durch das kontextabhängige Profil wird die Anzahl der generierten Optionen - aus denen der Nutzer auswählen kann - und die Ausgabe der Daten dahingehend bestimmt, dass eine übersichtliche und nutzergerechte Darstellung ermöglicht wird. Bei Anforderung einer Information zum Kraftfahrzeug wird aus der Gesamtmenge der zu dieser Information verfügbaren Daten profilabhängig eine Teilmenge - die auch der Gesamtmenge entsprechen kann - ausgewählt. Diese ausgewählten Daten werden in einer für den Nutzer besonders datenoptimierten Art und Weise ausgegeben. Durch dieses Vorgehen wird der Ablauf der Datenauswahl und der Datenausgabe kontextabhängig verkürzt. Damit liefert die vorgeschlagene Erfindung sowohl einen Beitrag zum Komfort als auch zur Sicherheit. Beispielsweise wird dem Nutzer profilabhängig beim Aufleuchten einer Fahrzeuganzeige automatisch durch die Ausgabe entsprechender Daten eine Erklärung für diese Fahrzeuganzeige angeboten. So ist der Nutzer sofort informiert, ohne für die Erklärung erst überlegen oder gar umständliche Bedienungen vornehmen zu müssen. Ebenfalls möglich ist es, dem Nutzer profilabhängig gezielte Vorschläge zu machen und ihn auf Fahrzeugfunktionen hinzuweisen, die in einer konkreten Situation geeignet eingesetzt werden können.

Vorteilhaft ist es, wenn eine Bedienfunktion, deren Einsatz mit den ausgegebenen Daten vorgeschlagen wird, profil- und optionsabhängig ausgelöst wird. Dadurch wird der Bedienkomfort weiter erhöht, denn der Nutzer kann auf das Suchen nach dem dieser Bedienfunktion zugeordneten Auslösemittel verzichten, indem die vorgeschlagene Bedienfunktion auf einfache und möglichst zeitoptimierte Weise ausgelöst wird. Eine derartige unmittelbare Auslösung der Bedienfunktion ohne vorherige Rückfrage beim Nutzer ermöglicht insbesondere in zeitkritischen Fahrsituationen eine weitgehend sichere Auslösung der Bedienfunktion. Alternativ kann eine mittelbare Auslösung der Bedienfunktion vorgesehen sein. Dabei wird profilabhängig eine entsprechende Option vorgegeben, welche angewählt wird und die dann eine mittelbare Auslösung der Bedienfunktion vornimmt. Ein Beispiel für eine unmittelbare oder mittelbare Auslösung ist gegeben, wenn der Fahrer beim Fahrzeug den Rückwärtsgang wählt und dadurch ein elektrisch verfahrbares Heckrollo eingefahren bzw. das Einfahren des Heckrollos als Option vorgeschlagen wird.

Eine vorteilhafte Ausführungsform der Erfindung wählt für einen Nutzer ein kontextabhängiges Profil entsprechend der Zuordnung des Nutzers zu einer vorgegebenen Nutzergruppe aus. Damit wird der individuelle Komfort weiter gesteigert, indem ein spezieller, gruppenspezifischer Informationsbedarf erfüllt wird. Beispielsweise wird durch die Zuordnung des Nutzers zu einer Nutzergruppe berücksichtigt, ob dem Nutzer das Fahrzeug oder die Fahrzeugmarke bereits bekannt ist. Dabei umfasst eine erste Nutzergruppe solche Nutzer, für die das Fahrzeug bzw. die Fahrzeugmarke neu ist, und eine zweite Nutzergruppe umfasst erfahrene Nutzer. Ist z.B. ein Nutzer der ersten Nutzergruppe zugeordnet, wird für ihn ein spezielles kontextabhängiges Profil vorgegeben, welches eine zusätzliche, erklärende Datenausgabe - beispielsweise zu Bedienelementen - bewirkt. Alternativ oder zusätzlich ist bei der Zuordnung des Nutzers zu der ersten Nutzergruppe eine Kurzerklärung zum Fahrzeug und seinen Bedienelementen möglich. Die beschriebene Zuordnung zu Nutzergruppen wird beispielsweise im Rahmen von Serviceaufenthalten in einer Werkstatt durchgeführt. So kann bei der Übergabe des Fahrzeugs das Profil "neuer Nutzer" vorgegeben werden. Bei einem der sich anschließenden Termine in der Werkstatt wird dann die Gruppe "erfahrene Nutzer" vorgegeben.

Eine weitere Möglichkeit für eine vorgebbare Nutzergruppe ist die Auswahl eines Profils "Interessierter Nutzer", welches z.B. zu vorgebbaren Fahrzeugreaktionen Daten in Form von Erklärungen oder technischen Erläuterungen zu Fahrzeugfunktionen liefert. Durch die Zuordnung des Nutzers zu einer Nutzergruppe mit Handicap können profilabhängig in bestimmten Situationen Daten zur Unterstützung des Nutzers ausgegeben werden. So werden z.B. bei einer Zuordnung des Nutzers zu einer Nutzergruppe "Eingeschränktes Hörvermögen" profilabhängig ergänzende visuelle Daten ausgegeben, wenn standardmäßig ein Bedienelement im Fahrzeug eine akustische Rückmeldung vornimmt. Darüber hinaus kann ein Nutzer auch zu mehr als einer Nutzergruppe zugeordnet werden. Bevorzugt werden, wenn ein Nutzer zu mehr als einer Nutzergruppe zugeordnet ist - und somit mehr als ein Profil für ihn vorgegeben ist - den verschiedenen Profilen dabei unterschiedliche Prioritäten zugeordnet. Falls ein Signal zur Darstellung von Optionen und/ oder zur Ausgabe von Daten (im Folgenden wird vereinfachend nur noch von der Ausgabe von Optionen bzw. Daten gesprochen) von zwei oder mehr Profilen vorliegt, werden die Optionen bzw. Daten folgerichtig und abhängig von der Priorität des Profils ausgegeben. Dabei werden z.B. die Optionen bzw. Daten mit der höchsten Priorität sofort ausgegeben und es wird zusätzlich eine Option dargestellt mit deren Auswahl sich der Nutzer die weiteren Optionen bzw. Daten ausgeben lassen kann. Auch können getrennte Profile für mehrere Nutzer vorgegeben werden, z.B. für einen Nutzer, der das Fahrzeug führt, einen Nutzer, der Beifahrer ist oder einen Nutzer, der im Fond chauffiert wird. In einem für den Fahrzeugführer vorgegebenen Profil werden z.B. die Fahrsicherheit betreffende Funktionen vorgesehen, während in einem für den Fondpassagier vorgegebenen Profil z.B. Audio- und Multimediafunktionen vorgesehen sind. In der beschriebenen Weise wird durch das kontextabhängige Profil für den Fahrzeugführer die Bediensicherheit und damit die Verkehrssicherheit erhöht, für einen Fondpassagier wird der Bedienkomfort erhöht und eine umfassende Information über die zur Verfügung stehenden Bedienfunktionen gegeben. Ferner können auch weitere Profile vorgegeben werden, beispielsweise kann ein spezifisches Profil für einen Servicetechniker mit einer Darstellung von Optionen und/ oder Ausgabe von Daten zur Diagnose des Fahrzeugs vorgesehen sein.

Eine weitere, vorteilhafte Ausführungsform der Erfindung wählt ein kontextabhängiges Profil für eine vorgebbare Fahrzeugumgebung aus. Dabei wird ein Nutzer auf Änderungen hingewiesen, die sich im Verlauf seiner Fahrt ergeben, indem profilabhängig Optionen und/ oder Daten ausgegeben werden, die es dem Nutzer ermöglichen, sich rechtzeitig auf geänderte Bedingungen auf seiner Reiseroute vorbereiten. Beispielsweise kann er sich beizeiten über für die neuen Bedingungen geeignete Bedienfunktionen informieren und diese Funktionen auslösen. So können für den als Attribut in der digitalen Straßenkarte des Fahrzeugs gespeicherten Fall einer schlechten Straßenbeschaffenheit profilabhängig Optionen dargestellt und/ oder Daten über die Bedienelemente einer Niveauregulierung (welche die Bodenfreiheit des Kraftfahrzeuges einstellt) ausgegeben werden. Weiterhin kann z.B. ein länderspezifisches Profil vorgegeben werden. Bei einem detektierten Übertritt einer Landesgrenze werden profilabhängig Hinweise auf länderspezifische Verkehrsregeln gegeben, wobei zur Identifizierung des Grenzübertritts z.B. eine herkömmliche Vorrichtung zur Fahrzeugortung eingesetzt wird.

Bei einer weitere Ausgestaltung der Erfindung werden kontextabhängige Profile entsprechend der Fahrzeugart vorgegeben. Hierdurch wird ein Nutzer auf Änderungen hingewiesen, die sich bei einem Wechsel der von ihm aktuell genutzten Fahrzeugart ergeben. Wechselt der Nutzer beispielsweise von seinem bisherigen auf ein neueres Fahrzeugmodell seiner Fahrzeugmarke, so werden ihm nur Optionen bzw. Daten zu solchen Bedienelementen ausgegeben, die sich im Vergleich zu seinem bisher genutzten Fahrzeug geändert haben bzw. die neu sind. Dies gilt analog beispielsweise für Nachrüstungen oder Softwareupdates von Fahrzeugen. Es werden jeweils zuerst die Unterschiede zwischen dem aktuellen Fahrzeug und dem Fahrzeug, das dem Nutzer bekannt ist, festgestellt: Anschließend werden dem Nutzer profilabhängig nur solche Optionen bzw. Daten ausgegeben, die mit diesem Unterschied für den Nutzer zusammenhängen. Somit wird der Nutzer profilabhängig informiert über die Möglichkeiten, die das aktuell genutzte Fahrzeug bietet. Bevorzugt werden diese kontextabhängige Profile nach einer Fahrzeugart individuell für einen Nutzer vorgegeben. Dabei kann beispielsweise ein Profil "Erster Nutzer" vorhanden sein, welches Neuerungen nur ein einziges Mal erläutert, während ein Profil "Zweiter Nutzer" diese Änderungen innerhalb eines bestimmten Zeitraums jeweils bei Antritt der Fahrt erläutert.

Sehr vorteilhaft ist es, kontextabhängige Profile vorzugeben, die in Abhängigkeit von mindestens einer aktuellen Fahrzeuggröße Optionen und/ oder Daten ausgeben. Aktuelle Fahrzeuggrößen sind z.B. aktuell gemessene Sensordaten oder Fahrzeug-Systemzustände wie die Heizstufe der Sitzheizung oder eine vom Reiserechner bestimmte Reichweite des Fahrzeugs mit der derzeit verfügbaren Kraftstoffmenge. Dadurch kann ein Fahrzeugnutzer besonders schnell über spezielle Situationen informiert werden, indem ihm profilabhängig zu der aus den Fahrzeuggrößen abgeleiteten Situation entsprechende Daten ausgegeben werden. Beispielsweise können Optionen bzw. Daten zu ASR ("Anti-Schlupf-Regelung") gegeben werden, wenn beim Anfahrvorgang die Räder durchdrehen. Auch können Hinweisezum "Freifräsen" (durch kurzzeitiges Ausschalten von ASR durch den Nutzer beim Anfahrvorgang) profilabhängig ausgegeben werden, indem auf das Bedienelement zum Ausschalten von ASR hingewiesen wird und/ oder auch eine unmittelbare Auslösung - d.h. Ausschaltung - mit bzw. ohne vorherige Rückfrage beim Nutzer bewirkt wird. Im Fall einer Panne oder eines Unfalls können z.B. Optionen bzw. Daten zum richtigen Verhalten in Notsituationen und/ oder zur Lage des Warndreiecks im Fahrzeug ausgegeben werden. Die Fahrzeuggrößen können auch von außerhalb des Fahrzeugs - z.B. drahtlos per XFCD ("Extended Floating Car Data") - übertragen werden. So können Sensordaten über Witterungsbedingungen auf der vorausliegenden Fahrtstrecke in das Fahrzeug übertragen werden. Dem Nutzer werden dann'profilabhängig derart Optionen bzw. Daten ausgegeben, dass der Nutzer eine für diese Bedingungen vorteilhafte Einstellung einer Klimaanlage im Fahrzeug vornehmen kann.

Eine weitere, vorteilhafte Ausprägung der Erfindung sieht eine Plausibilitätsprüfung für eine vom Nutzer ausgeführte Bedienung vor, wobei abhängig vom Ergebnis der Plausibilitätsprüfung die Optionen und/ oder die Daten ausgegeben werden. Dies erhöht die Bediensicherheit und steigert den Komfort, indem einem Nutzer eine Information über eine Bedienfunktion oder deren Bedienelement profilabhängig angeboten wird, wenn er einen Bedienfehler macht oder wenn ein Algorithmus ein Bedienproblem detektiert. So können beispielsweise bei mehrmaliger Nutzung der Bedienelemente für Fernlicht und/ oder Blinker innerhalb eines kurzen Zeitraums, während es gleichzeitig regnet, Daten zur Bedienung des Scheibenwischers - insbesondere zum Einschalten - als Optionen zur Auswahl angeboten und/ oder ausgegeben werden.

In einer weiteren Ausgestaltung der Erfindung werden Fahrzeuggrößen und/ oder Bedienungen in einem Speicher abgelegt. In einem ersten Schritt wird dieser Speicher abgefragt, bevor profilabhängig Optionen dargestellt und/ oder Daten ausgegeben werden. Sind Werte über vorangegangene Fahrzeuggrößen bzw. Bedienungen im Speicher hinterlegt, so werden diese Werte dahingehend geprüft, ob sie bei der Darstellung der aktuellen Optionen und/ oder der Ausgabe der aktuellen Daten zu berücksichtigen sind. Hierdurch wird der Bedienkomfort weiter gesteigert, indem eine schnelle Auswahl von Optionen bzw. Daten individuell auf den Nutzer abgestimmt wird. Es wird quasi ein "Gedächtnis" realisiert, indem z.B. aus der Analyse vorangegangener Bedienungen Rückschlüsse für eine aktuelle Bedienung gezogen werden und z.B. bei Bedienschritten, die der Nutzer üblicherweise vornimmt, eine Darstellung von Informationen und eine Ausgabe von Daten unterdrückt werden. Auch die Klassifizierung von Bedienproblemen oder die Einordnung aktueller Fahrzeuggrößen wird verbessert, indem z.B. für einen Nutzer spezifische Bedienschritte erkannt und nicht mehr als ein Bedienproblem klassifiziert und Daten zur Erklärung ausgegeben werden. Eine solche Erkennung kann beispielsweise durch Verwendung von Verfahren der "Künstlichen Intelligenz" (z.B. durch ein neuronales Netz) erreicht werden. Durch die Nutzung von Ergebnissen der beschriebenen Prüfung von im Speicher hinterlegten Werten können auch Modifikationen am aktuell vorgegebenen, kontextabhängigen Profil selbst vorgenommen werden und/ oder ein anderes kontextabhängiges Profil aufgerufen und anschließend vorgegeben werden.

Vorteilhaft ist es, wenn als Information über das Kraftfahrzeug wenigstens ein Teil einer Betriebsanleitung des Kraftfahrzeugs dargestellt wird. Ein hierfür geeignetes Verfahren ist in der nicht vorveröffentlichten, älteren deutschen Patentanmeldung DE 199 59 755.3-21 beschrieben. Bei diesem Verfahren wird in einem vorgeschalteten Schritt eine aktuelle Ausstattungsvariante des Kraftfahrzeugs ermittelt und in Abhängigkeit von dieser ermittelten Variante wird aus einer ersten Datenbank eine zweite Datenbank generiert, wobei diese zweite Datenbank nur Informationen über die Bedienung für die aktuelle Ausstattungsvariante des Kraftfahrzeugs umfasst. Hiermit ist ein stets aktueller Informationsstand über das Kraftfahrzeug und dessen Bedienelemente sichergestellt.

Eine Vorrichtung zur Verarbeitung und Ausgabe von Daten über eine Information eines Kraftfahrzeugs oder dessen Bedienelemente für einen Nutzer umfasst ein Mittel zur Darstellung von Optionen für die Information (im Folgenden kurz erstes Ausgabemittel genannt), ein Mittel zur Auswahl wenigstens einer Option durch den Nutzer (im Folgenden kurz Auswahlmittel genannt), ein Mittel zur Ausgabe von die ausgewählte Option betreffenden Daten (im Folgenden kurz zweites Ausgabemittel genannt)und eine Verarbeitungseinheit, die anhand zumindest eines vorgegebenen, kontextabhängigen Profils eine durch das Profil gekennzeichnete Anzahl von Optionen generiert und die Daten profil- und optionsabhängig ausgibt. Diese Verarbeitungseinheit kann beispielsweise als ein Fahrzeugrechner (eine im Fahrzeug angeordnete Verarbeitungseinheit) ausgeführt sein. Sie kann aber auch durch zusätzliche Funktionen einer bereits im Fahrzeug vorhandenen Einheit - beispielsweise eines Steuergerätes - realisiert sein.

Das erste Ausgabemittel und/ oder das zweite Ausgabemittel kann z.B. in Form einer Anzeigeeinheit von herkömmlicher Bauart, wie LCD ("Liquid Crystal Display") oder Einspiegelung in die Frontscheibe ("Head-Up Display"), vorgesehen sein. Dabei ist es vorteilhaft, die Anzeigeeinheit abhängig vom die Optionen bzw. die Daten charakterisierenden Umfang (im folgenden wird beides Datenumfang genannt) auszubilden. Beispielsweise kann ein kleiner Datenumfang mittels eines bereits im Fahrzeug vorhandenen Displays ausgegeben werden, während ein größerer Datenumfang mittels eines weiteren, auf dem Armaturenbrett oder in der Mittelkonsole angebrachten größeren Displays ausgegeben wird. Neben diesen beschriebenen sind eine Vielzahl weiterer Möglichkeiten zur Anzeige von Optionen bzw. Daten realisierbar. Die Ausgabe der Optionen und Daten kann weiterhin davon abhängen, welche gerätetechnische Ausrüstung ein Fahrzeug aufweist. So kann z.B. bei Fehlen eines geeigneten Displays die Ausgabe bestimmter Daten - wie beispielsweise Videosequenzen zur Kurzeinführung eines neuen Nutzers in das Fahrzeug - unterdrückt werden. Natürlich kann auch ein gemeinsames Display für die Ausgabe der Optionen und Daten vorgesehen sein. Zur Integration des ersten Ausgabemittels und/ oder des zweiten Ausgabemittels mit dem Auswahlmittel ist bevorzugt eine herkömmliche berührungsempfindliche Anzeige ("touchscreen") vorgesehen.

Alternativ oder zusätzlich kann das Auswahlmittel als eine Sprachbedienung ausgebildet sein. Eine solche Sprachbedienung wird bereits heute in Kraftfahrzeugen eingesetzt, da sie dem Fahrer erlaubt, seine visuelle Aufmerksamkeit auf das Verkehrsgeschehen zu konzentrieren. Weiterhin kann das Auswahlmittel - zusätzlich oder alternativ - als ein manuelles Bedienelement von herkömmlicher Bauart ausgebildet sein. Dabei ist das manuelle Bedienelement z.B. in Form eines Joysticks ausgeführt, oder als ein kombinierter Dreh-/Drückknopf, der abhängig von der Anzahl von Optionen für die Information über jeweils unterschiedlich viele Raststellungen verfügt. Auch ein solches Bedienelement ist bereits in vielen Fahrzeugen - z.B. zur Bedienung eines Navigationsgerätes - vorhanden und kann in vorteilhafter Weise genutzt werden. Weitere Möglichkeiten zur Bedienung können vorgesehen sein. Für die Ausgabe der Optionen bzw. der ausgewählten Daten können Mittel herkömmlicher Bauart vorgesehen sein, beispielsweise akustische Ausgaben (z.B. ein Audiosystem) oder haptische Ausgaben (z.B. ein "force-feedback"- Bedienelement, bei dessen Nutzung eine Gegenkraft am Bedienelement ausgeübt wird). Das für die Ein- und/ oder Ausgabe verwendete Mittel kann profilabhängig auch variabel vorgegeben werden, z.B. wird eine optische durch eine akustische Ausgabe ersetzt, sobald des Fahrzeug eine festgelegte Grenzgeschwindigkeit überschreitet. Weiterhin können die ausgegebenen Daten weiterverarbeitet und anderen Systemen, insbesondere Assistenzsystemen im Kraftfahrzeug, zugeführt werden.

Ausführungsbeispiele der Erfindung werden anhand einer Zeichnung näher erläutert. Dabei sind einander entsprechende Teile in allen Figuren mit dem gleichen Bezugszeichen versehen. Es zeigen:
- Fig. 1: in schematischer Darstellung ein Blockschaltbild für eine Ausführungsform der Vorrichtung zur Ausgabe von Daten über eine Information eines Kraftfahrzeugs,
- Fig. 2: in schematischer Darstellung ein Blockschaltbild für eine weitere Ausführungsform'der Vorrichtung,
- Fig. 3: eine Draufsicht auf eine Ausführungsform der Vorrichtung,
- Fig. 4: beispielhaft ein auf einer Anzeigeeinheit dargestelltes Bild, erzeugt von der Vorrichtung in einem Grundzustand,
- Fig. 5: beispielhaft ein auf einer Anzeigeeinheit dargestelltes Bild, erzeugt von der Vorrichtung in einem Zustand mit einer vorselektierten Option,
- Fig. 6: beispielhaft ein auf einer Anzeigeeinheit dargestelltes Bild, erzeugt von der Vorrichtung in einem Zustand mit ausgegebenen Daten.

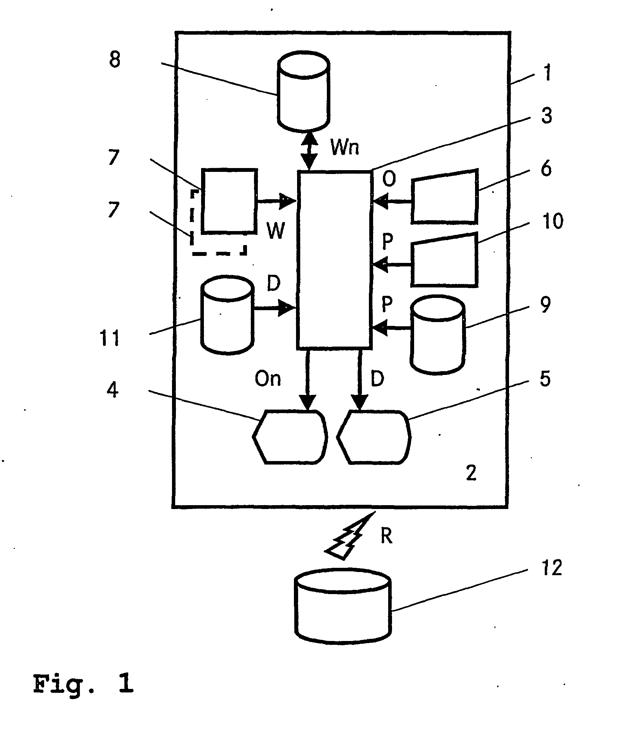

Figur 1 zeigt ein Kraftfahrzeug 1 mit einer Vorrichtung 2 zur Ausgabe von Daten D mit einer Verarbeitungseinheit 3. Die Vorrichtung 2 umfasst ein Mittel 4 zur Darstellung von Optionen On für die Information I (im weiteren kurz Ausgabemittel 4 genannt)und ein Mittel 5 zur Ausgabe von die ausgewählte Option O betreffende Daten D (im weiteren kurz Ausgabemittel 5 genannt). Die beiden Ausgabemittel 4 und 5 sind z.B. zwei voneinander entfernt angeordnete Displays. Alternativ können beide Ausgabemittel 4 und 5 durch ein Display gebildet sein. Als weitere Alternative oder zusätzlich ist für das Ausgabemittel 4 und/ oder 5 eine akustische Ausgabe vorgesehen. Weiterhin verfügt die Verarbeitungseinheit 3 über ein Mittel 6 zur Auswahl wenigstens einer Option O durch den Nutzer (im weiteren kurz Auswahlmittel 6 genannt), wobei dieses Auswahlmittel 6 als separate Einheit ausgeführt ist. Das Auswahlmittel 6 ist z.B. als Sprachbedienung ausgebildet. Zusätzlich oder alternativ kann für das Auswahlmittel 6 ein manuelles Bedienelement herkömmlicher Bauart, z.B. ein Joystick oder ein kombinierter Dreh-/Drückknopf, der abhängig von der Anzahl von Optionen On für die Information über jeweils unterschiedlich viele Raststellungen verfügt. Als weitere Alternative ist eine Erkennung der Gestik und/ oder Mimik des Nutzers vorsehbar, wobei Körperbewegungen bzw. Gesichtsausdruck des Nutzers detektiert und anschließend klassifiziert und einem entsprechenden Bedienwunsch zugeordnet werden, anhand dessen dann diese betreffende Bedienung ausgeführt wird.

Der Verarbeitungseinheit 3 werden Werte W von mindestens einer Komponente 7 zugeführt. Diese Komponente 7 ist z.B. ein fahrzeugseitiger Sensor, der die aktuelle Geschwindigkeit misst, oder ein Steuergerät, welches für Einstellmöglichkeiten des Fahrersitzes vorgesehen ist. Möglich ist aber auch eine drahtlose Übertragung von Werten in das Fahrzeug z.B. aus anderen Fahrzeugen und/ oder aus am Fahrbahnrand angeordneten, lokalen Sendeeinrichtungen. Weiterhin ist ein Mittel 8 zur Speicherung von Werten Wn wie z.B. Sensordaten und/ oder Bedienungen vorgesehen (im folgenden Speichermittel 8 genannt). Das Speichermittel 8 kann als Teil der üblichen Peripheriekomponenten der Verarbeitungseinheit 3 in herkömmlicher Bauart ausgebildet sein.

Des weiteren wird aus einem Speicher 9 durch mindestens ein Profilwahlmittel 10 zumindest ein kontextabhängiges Profil P ausgewählt und der Verarbeitungseinheit 3 zugeführt. Das Profilwahlmittel 10 kann einen hierfür geeigneten Schalter - z..B. einen Dreh- oder Tastschalter - vorsehen. Der Nutzer bringt den Schalter in eine für ihn vorgesehene Schalterstellung, die von der Verarbeitungseinheit 3 erfasst wird, woraufhin diese das oder die vom Nutzer ausgewählten kontextabhängigen Profile P aus dem Speicher 9 abruft und für den Nutzer vorgibt. Alternativ ist das Profilwahlmittel 10 als Fingerprint-Sensor (Erkennung des "Fingerabdrucks" des Nutzers) mit der Startvorrichtung des Motors verbunden. Wenn der Nutzer den Startvorgang des Motors einleitet, wird er durch das Profilwahlmittel 10 identifiziert. Anschließend wird wenigsten ein für den Nutzer vorgesehenes, kontextabhängiges Profil P aus dem Speicher 9 abgerufen und für ihn vorgegeben. Ebenfalls als Profilwahlmittel 10 vorsehbar ist eine spezielle Schnittstelle der Verarbeitungseinheit 3, an die z.B. ein übliches Diagnosegerät zur Vorgabe eines kontextabhängigen Profils P angeschlossen werden kann. Alternativ oder zusätzlich ist für die Kombination aus Speicher 9 und Profilwahlmittel 10 ein elektronischer Datenträger vorsehbar, den der Nutzer mit sich führt - z.B. eine fahrerspezifische Chipkarte - und die in eine mit dem Fahrzeug verbundene Vorrichtung eingeführt wird. Auf der Chipkarte sind nutzerspezifische Werte gespeichert, die von der Verarbeitungseinheit 3 ausgewertet werden und die Auswahl eines für den Nutzer geeigneten kontextabhängigen Profils P bewirken. Der elektronische Datenträger kann auch zum Abspeichern weiterer Werte genutzt werden. So kann der Datenträger auch zur Speicherung von Werten Wn wie z.B. Sensordaten und/ oder Bedienungen des Nutzers vorgesehen sein.

Alternativ oder zusätzlich kann der Speicher 9 auch außerhalb des Fahrzeugs vorgesehen sein. Der Speicher 9 ist z.B. in einer Dienstezentrale (eine zentrale Verarbeitungseinheit mit einer Datenbank, die von Teilnehmern eines entsprechenden Dienstes drahtlos genutzt werden kann) vorsehbar. Aus der Dienstezentrale wird ein für den Nutzer vorgesehenes kontextabhängiges Profil P drahtlos in das Fahrzeug übertragen, wenn in dieser Zentrale detektiert wird, dass eine vom Nutzer mitgeführte Sende- und Empfangseinheit ("Funkschlüssel") den Startvorgang des Fahrzeugs einleitet. Alternativ oder zusätzlich dient die Dienstezentrale auch zur Speicherung von fahrzeugbezogenen Werten Wn wie z.B. Sensordaten und/ oder Bedienungen des Nutzers.

Die Auswahl der Information I, die Art und die Anzahl der zu der Information I generierten Optionen On und die Ausgabe der betreffenden Daten D wird durch das kontextabhängige Profil P mittels der Verarbeitungseinheit 3 gesteuert. Die auszugebenden Daten D werden aus einer Datenbank 11 profilund/ oder optionsabhängig selektiert, gelesen und unter Verwendung des Ausgabemittels 5 ausgegeben. Je nach Art und Ausführung der Vorrichtung 2 ist die Datenbank 11 im Kraftfahrzeugs 1 integriert. Alternativ oder zusätzlich können Daten von einer externen Datenbank 12 mittels einer drahtlosen Übertragung R von der Verarbeitungseinheit 2 gelesen werden. Diese externen Datenbank 12 kann in der oben beschriebenen Dienstezentrale vorgesehen sein.

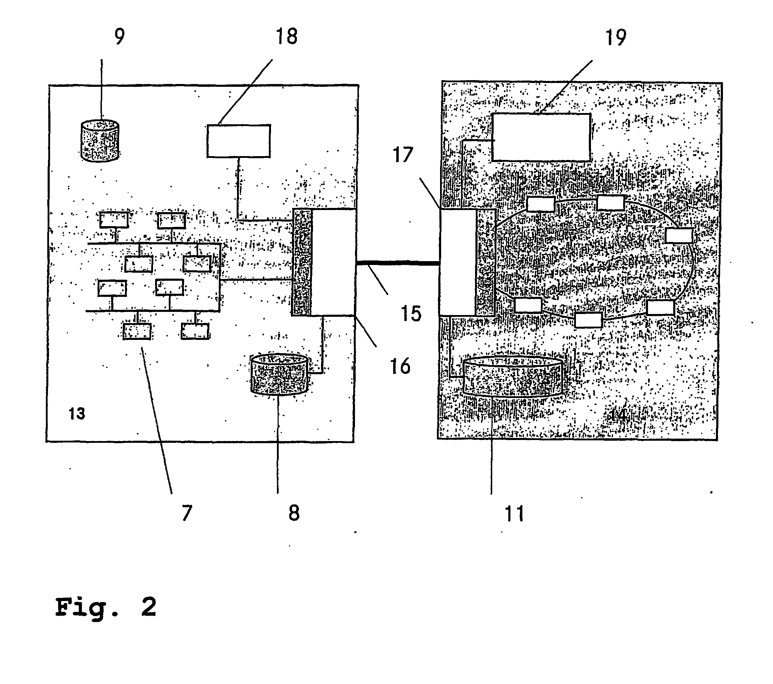

In Fig. 2 ist eine weitere Ausführungsform der Vorrichtung 2 zur Ausgabe von Daten D über die Information I dargestellt.
Die Vorrichtung 2 umfasst zwei getrennte Netzwerke 13 und 14, wobei die Netzwerke als Einheiten von jeweils einer Vielzahl mit Übertragungsleitungen verbundener Netzknoten ausgeführt sind. Dieser verteilte Aufbau trennt die in Fig. 1 gezeigten Funktionseinheiten der Vorrichtung 2 in das Netzwerk 14, in dem die Werte W der Komponenten 7 gesammelt und aufbereitet werden, während die Speicherung der auszugebenden Daten D, deren Aufbereitung und Ausgabe von dem Netzwerk 14 durchgeführt wird. Die Netzwerke 13, 14 sind durch eine Übertragungsleitung 15 miteinander verbunden. Für die Anbindung der beiden Netzwerke 13, 14 an die Übertragungsleitung 15 ist im Netzwerk 13 der Gateway-Netzknoten 16 und im Netzwerk 14 der Gateway-Netzknoten 17 vorgesehen. Wie in Fig. 2 schematisch dargestellt, sind die beiden Netzwerke 13, 14 von unterschiedlicher Architektur und so für unterschiedliche Anforderungen ausgelegt. Das Netzwerk 13 weist eine Baumstruktur auf und umfasst Komponenten 7, das Speichermittel 8, den Speicher 9 und eine zugehörige Anzeigeeinheit 18. Demgegenüber umfasst das Netzwerk 14, das eine Ringstruktur aufweist und besonders zur Übertragung großer Datenmengen geeignet ist, die Datenbank 11 und eine zugehörige, großformatige Anzeigeeinheit 19.

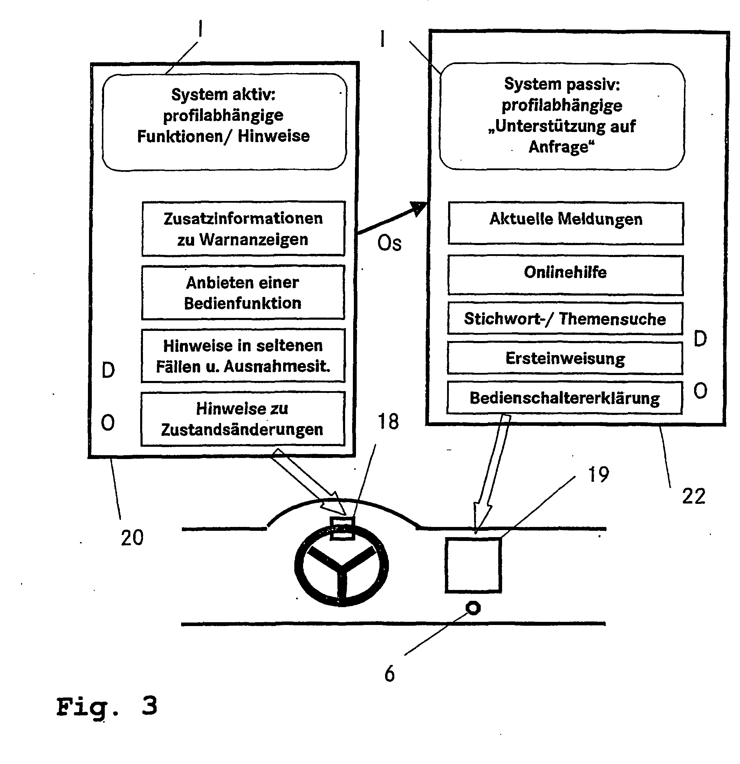

In Fig. 3 ist eine Draufsicht auf eine Ausführungsform der Vorrichtung 2 dargestellt. Die Vorrichtung 2 umfasst im Armaturenbrett des Kraftfahrzeuges 1 die Anzeigeeinheit 18, das Auswahlmittel 6 als Mittel zur Auswahl von Optionen On und die Anzeigeeinheit 19. Mittels der Verarbeitungseinheit 3 werden auf der Anzeigeeinheit 18 profil- und/ oder optionsabhängig Daten D zu einer Information I dargestellt. Dabei bezeichnet die Information I einen Oberbegriff, unter dem verschiedene Daten D zusammengefasst werden können. Wie in Bild 20 dargestellt, werden auf der Anzeigeeinheit 18 durch die Verarbeitungseinheit 3 Erklärungen zu Warnanzeigen und Änderungen von Zuständen des Kraftfahrzeugs 1 sowie zu Ausnahmesituationen und zu geeigneten Bedienfunktionen ausgegeben. Profilabhängig werden bei einem weitergehenden Informationswunsch bezüglich bereits in der Anzeigeeinheit 18 in Form von Kurzinformation ausgegebenen Daten D weitere Daten D als ausführliche Erklärung in der Anzeigeeinheit 19 ausgegeben. Dazu sind die Anzeigeeinheiten 18, 19 in ihrer Größe, Art und Anordnung entsprechend ausgeführt.

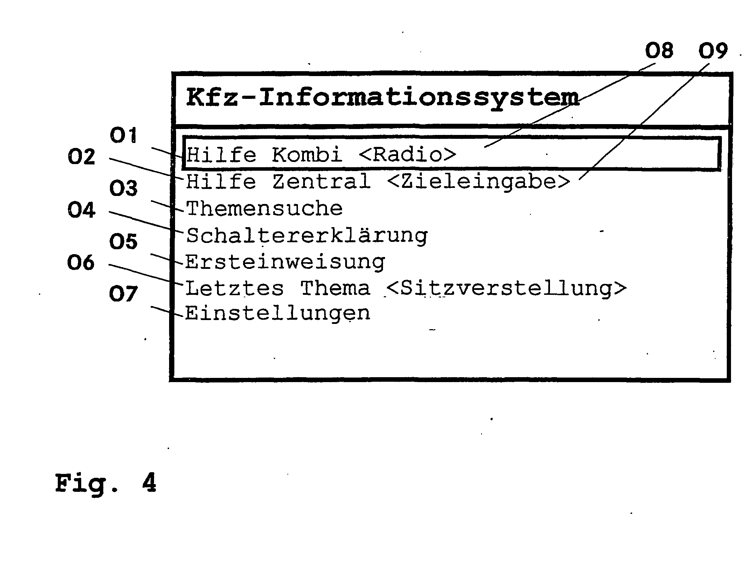

Zu der Information I werden zusätzlich oder alternativ Optionen 0 zur Ausgabe von Daten in der Anzeigeeinheit 18 dargestellt, wie dies beispielhaft in Fig. 4 dargestellt ist. Durch Bedienung des Auswahlmittels 6 wird eine betreffende Option Os zur Ausgabe der die betreffende Information beschreibenden Daten D ausgewählt. Bei einer direkten Anforderung von Information I durch den Nutzer über das manuelle Bedienelement 6 werden entsprechende Daten D in der Anzeigeeinheit 19 ausgegeben. Diese Daten umfassen, wie in Bild 22 gezeigt, eine "Onlinehilfe", eine "Stichwort-/ Themensuche", eine "Ersteinweisung" sowie eine "Bedienschaltererklärung".

Fig. 4 zeigt beispielhaft ein auf dem Ausgabemittel 4 oder 5 dargestelltes Bild, erzeugt von der Vorrichtung 2. Das Bild wird profilabhängig von der Vorrichtung 2 erzeugt, wenn sich die Vorrichtung 2 in einem Grundzustand befindet. In diesem Zustand kann der Nutzer profilabhängig direkt Daten D anfordern. Abhängig vom kontextabhängigen Profil stehen dem Nutzer, wie in Fig. 4 zu erkennen ist, die Optionen O1 bis O7 zur Information I "Kfz-Informationssystem" zur Auswahl. Der Nutzer kann erklärende Daten D und/ oder weitere Optionen O zum Kombiinstrument und zur Zentraleinheit durch Anwahl entsprechender Optionen O1, O2 mittels des Auswahlmittels 6 aufrufen. Dabei ist bereits eine weitere Option O8, O9 zu beiden ersten Optionen O1, O2 vorgegeben, welche durch Auswahl selektiert werden können. Profilabhängig ist die Option O1 bereits ausgewählt. Weiterhin kann der Nutzer gezielt nach Themen suchen, zu denen er weitergehende Erklärungen wünscht, indem er die Option O3 "Themensuche" selektiert. Wählt der Nutzer die Option O4 "Schaltererklärung", so kann er sich direkt Daten D und/ oder weitere Optionen O zu einzelnen Bedienelementen ausgeben lassen. Die Auswahl der Option O5 "Ersteinweisung" durch den Nutzer führt zur Ausgabe von Daten D und/ oder weitere Optionen O, die für den Nutzer vorteilhaft sind, wenn er das Kraftfahrzeug zum ersten Mal nutzt. Durch Wahl der Option 06 "Letztes Thema" werden dem Nutzer Daten ausgegeben, die er bereits zu einem früheren Zeitpunkt einmal angefordert hatte. Die Wahl der Option O7 "Einstellungen" liefert dem Nutzer Information über die erfindungsgemäße Vorrichtung selbst.

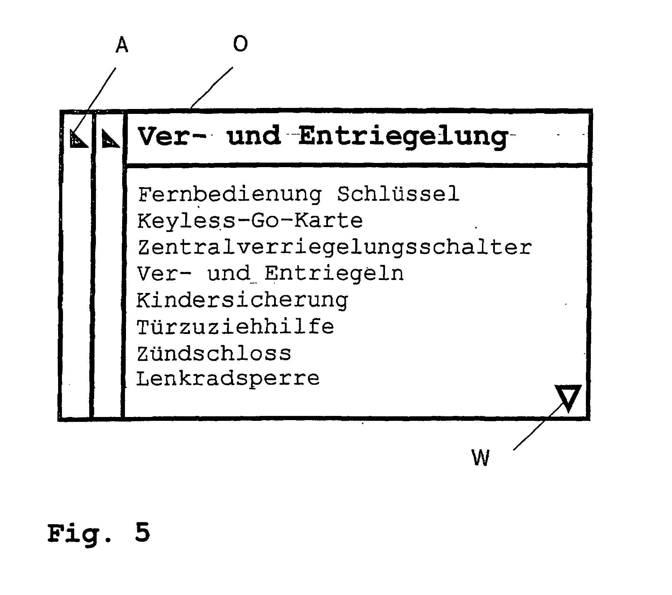

In Fig. 5 ist beispielhaft ein weiteres, auf einem der Ausgabemittel 4 oder 5 dargestelltes Bild gezeigt. Das Bild repräsentiert dem Nutzer, dass die Vorrichtung 2 sich in einem Zustand befindet, in dem bereits eine Option O selektiert wurde. In diesem Zustand kann der Nutzer sich die entsprechenden Daten D profilabhängig und durch Auswahl der betreffenden Option O optionsabhängig automatisch ausgeben lassen. Ebenfalls wird dem Nutzer durch eine Anzahl von Symbolen A angezeigt, wie viele Optionen O bereits ausgewählt wurden. Dabei sind die jeweils erzeugten Bilder als hierarchische Struktur übereinander abgebildet. Durch die profilabhängig direkte Darstellung eines solchen Bildes vermeidet die Erfindung den langwierigen Auswahlprozess, der einer Darstellung dieses Bildes ansonsten vorausgehen würde. Durch direktes Anwählen eines Symbols A wird das jeweilige Bild in der hierarchischen Struktur direkt dargestellt. Ein Symbol W zeigt dem Nutzer, dass weitere Optionen O generiert wurden, die durch Auswahl von Symbol W "durchgeblättert" werden können.

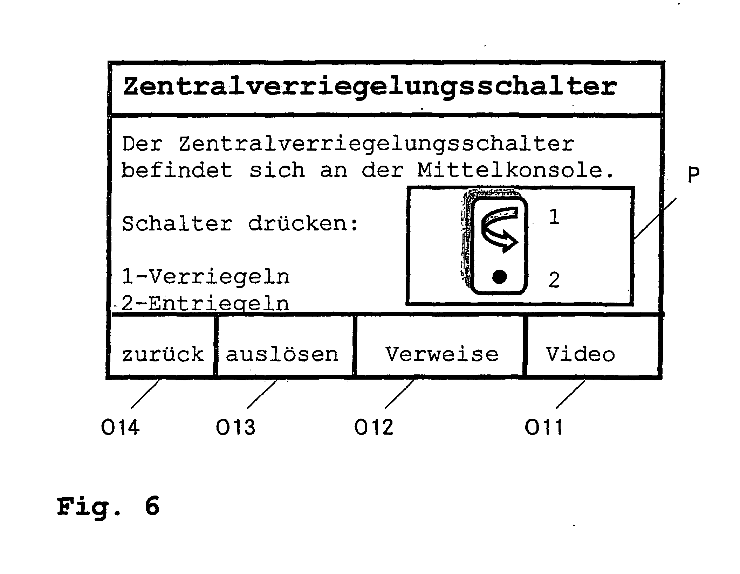

Fig. 6 zeigt beispielhaft ein auf der Anzeigeeinheit 5 dargestelltes Bild. Dieses Bild wird von der Vorrichtung 2 erzeugt, wenn sie sich in einem Zustand mit ausgegebenen Daten D befindet. Diese Daten D umfassen, wie auf Fig. 6 zu erkennen ist, ein Piktogramm P - das aus der Bedienungsanleitung des Kraftfahrzeugs 1 entnommen wurde - und erklärenden Text. Durch Auswahl der Option O11 werden weitere Daten D ausgegeben. Durch Auswahl der Option O12 werden thematisch verwandte Daten D als Optionen O zur Ausgabe dargestellt. Durch Auswahl der Option O13 wird die durch die Daten D erklärte Bedienfunktion ausgelöst. Durch Auswahl der Option O14 wird das von einem vorhergehenden Verarbeitungsschritt erzeugte Bild dargestellt.

## Patentansprüche

1. Verfahren zur Ausgabe von Daten (D) über eine Information (I) eines Kraftfahrzeugs (1) für einen Nutzer, bei dem
a) zumindest ein kontextabhängiges Profil (P) vorgegeben ist,
b) eine durch das kontextabhängige Profil **gekennzeichnete** Anzahl von Optionen (On) für die Information (I) generiert wird, und
c) die eine ausgewählte Option (On) betreffenden Daten (D) profilabhängig ausgegeben werden.

2. Verfahren nach Anspruch 1,
**dadurch gekennzeichnet,**
**daß** eine den ausgegebenen Daten (D) entsprechende Bedienfunktion profil- und optionsabhängig ausgelöst wird.

3. Verfahren nach Anspruch 1 oder 2,
**dadurch gekennzeichnet,**
**daß** das Profil (P) für eine vorgebbare Nutzergruppe ausgewählt wird.

4. Verfahren nach einem der Ansprüche 1 bis 3,
**dadurch gekennzeichnet ,**
**daß** das Profil (P) für eine vorgebbare Fahrzeugumgebung ausgewählt wird.

5. Verfahren nach einem der Ansprüche 1 bis 4,
**dadurch gekennzeichnet,**
**daß** das Profil (P) entsprechend der Fahrzeugart ausgewählt wird.

6. Verfahren nach einem der Ansprüche 1 bis 5,
**dadurch gekennzeichnet,**
**daß** in Abhängigkeit von aktuellen Fahrzeuggrößen die Optionen (On) dargestellt und/ oder die Daten (D) ausgegeben werden.

7. Verfahren nach einem der Ansprüche 1 bis 6,
**dadurch gekennzeichnet,**
**daß** eine Plausibilitätsprüfung für eine vom Nutzer ausgeführte Bedienung durchgeführt und abhängig von deren Ergebnis die Optionen (On) dargestellt und/ oder die Daten (D) ausgegeben werden.

8. Verfahren nach einem der Ansprüche 1 bis 7,
**dadurch gekennzeichnet,**
**daß** vorangegangene Fahrzeuggrößen (W) und/ oder vorangegangene Bedienungen gespeichert werden und die Darstellung der Optionen (On) und/ oder die Ausgabe der Daten (D) in Abhängigkeit von diesen gespeicherten Werten (Wn) vorgenommen werden.

9. Verfahren nach einem der Ansprüche 1 bis 8,
**dadurch gekennzeichnet,**
**daß** die Daten (D) weiterverarbeitet und anderen Systemen, insbesondere Assistenzsystemen im Kraftfahrzeug, zugeführt werden.

10. Verfahren nach einem der Ansprüche 1 bis 9,
**dadurch gekennzeichnet,**
**daß** als Information (I) über das Kraftfahrzeug wenigstens ein Teil einer Betriebsanleitung des Kraftfahrzeugs dargestellt wird.

11. Vorrichtung zur Ausgabe von Daten (D) über eine Information (I) eines Kraftfahrzeugs (1) für einen Nutzer, umfassend
a) eine Verarbeitungseinheit (3), die anhand zumindest eines vorgegebenen kontextabhängigen Profils (P) eine durch das Profil (P) **gekennzeichnete** Anzahl von Optionen (On) generiert,
b) ein Mittel (4) zur Darstellung der profilabhängigen Optionen (On) für die Information (I),
c) ein Mittel (6) zur Auswahl wenigstens einer profilabhängigen Option (On) durch den Nutzer, und
d) ein Mittel (5) zur profilabhängigen Ausgabe von die ausgewählte Option (On) betreffenden Daten (D).

12. Vorrichtung nach Anspruch 11,
**dadurch gekennzeichnet,**
**daß** mindestens eine Anzeigeeinheit (18, 19) zur Ausgabe der Daten (D) in Abhängigkeit von einem diese charakterisierenden Datenumfang vorgesehen ist.

13. Vorrichtung nach Anspruch 11 oder 12,
**dadurch gekennzeichnet,**
**daß** das Mittel zur Auswahl (6) als eine Spracheingabe ausgeführt ist.

14. Vorrichtung nach einem der Ansprüche 11 bis 13,
**dadurch gekennzeichnet,**
**daß** das Mittel zur Auswahl (6) als ein manuelles Bedienelement ausgeführt ist.

15. Vorrichtung nach einem der Ansprüche 11 bis 14,
**dadurch gekennzeichnet,**
**daß** ein Mittel zur akustischen Ausgabe der Optionen (On) und/ oder der Daten (D) vorgesehen ist.

## Claims

1. Method for the output of data (D) for a user concerning information (I) related to a motor vehicle (1), in which:
a) at least one context-dependent profile (P) is specified,
b) a number of options (On) **characterised by** the context-dependent profile are generated for the information (I), and
c) the data (D) relating to a selected option (On) are output in a profile-dependent way.

2. Method according to Claim 1,
**characterised in that**
a control function corresponding to the data (D) output is actuated in a profile- and option-dependent way.

3. Method according to Claims 1 or 2,
**characterised in that**
the profile (P) is selected for a specifiable user group.

4. Method according to any of Claims 1 to 3,
**characterised in that**
the profile (P) is selected for a specifiable vehicle environment.

5. Method according to any of Claims 1 to 4,
**characterised in that**
the profile (P) is selected in accordance with the type of vehicle.

6. Method according to any of Claims 1 to 5,
**characterised in that**
the options (On) are displayed and/or the data (D) are output as a function of current vehicle parameters.

7. Method according to any of Claims 1 to 6,
**characterised in that**
a plausibility test for an operation performed by the user is carried out and, depending on its result, the options (On) are displayed and/or the data (D) are output.

8. Method according to any of Claims 1 to 7,
**characterised in that**
previous vehicle parameters (W) and/or previous operations are stored and the display of the options (On) and/or the output of the data (D) take place as a function of these stored values (Wn).

9. Method according to any of Claims 1 to 8,
**characterised in that**
the data (D) are processed further and passed on to other systems, in particular assistance systems in the motor vehicle.

10. Method according to any of Claims 1 to 9,
**characterised in that**
as information (I) concerning the motor vehicle, at least part of an operating instruction manual for the vehicle is displayed.

11. Device for the output of data (D) for a user concerning information (I) related to a motor vehicle (1), comprising:
a) a processing unit (3) which, with reference to at least one specified, context-dependent profile (P), generates a number of options (On) **characterised by** the said profile (P),
b) means (4) for the display of the profile-dependent options (On) for the information (I),
c) means (6) whereby the user can select at least one profile-dependent option (On), and
d) means (5) for the profile-dependent output of the data (D) relating to the option (On) selected.

12. Device according to Claim 11,
**characterised in that**
at least one display unit (18, 19) is provided for the output of the data (D) as a function of a data range characteristic thereof.

13. Device according to Claims 11 or 12,
**characterised in that**
the selection means (6) are in the form of a voice-actuated input.

14. Device according to any of Claims 11 to 13,
**characterised in that**
the selection means (6) are in the form of a manual control element.

15. Device according to any of Claims 11 to 14,
**characterised in that**
means are provided for the acoustic output of the options (On) and/or of the data (D).

## Revendications

1. Procédé destiné à fournir des données (D) sur une information (I) d'un véhicule (1) pour un utilisateur, dans lequel
a) est prédéfini au moins un profil (P) dépendant du contexte,
b) est généré un nombre d'options (On), **caractérisé par** le profil dépendant du contexte, pour l'information (I), et
c) sont fournies en fonction du profil les données (D) concernant l'option sélectionnée (On).

2. Procédé selon la revendication 1, **caractérisé en ce qu'**une fonction de commande correspondant aux données fournies (D) est déclenchée en fonction de profils et d'options.

3. Procédé selon la revendication 1 ou 2, **caractérisé en ce que** le profil (P) est sélectionné pour un groupe d'utilisateurs prédéfini.

4. Procédé selon une des revendications 1 à 3, **caractérisé en ce que** le profil (P) est sélectionné pour un environnement de véhicule prédéfini.

5. Procédé selon une des revendications 1 à 4, **caractérisé en ce que** le profil (P) est sélectionné selon le type de véhicule.

6. Procédé selon une des revendications 1 à 5, **caractérisé en ce que**, en fonction des tailles actuelles des véhicules, sont représentées les options (On) et/ou sont fournies les données (D).

7. Procédé selon une des revendications 1 à 6, **caractérisé en ce qu'**une vérification de la plausibilité est réalisée pour une commande exécutée par l'utilisateur et que, en fonction du résultat de la vérification, sont représentées les options (On) et/ou sont fournies les données (D).

8. Procédé selon une des revendications 1 à 7, **caractérisé en ce que** des tailles de véhicule déjà traitées (W) et/ou des commandes déjà traitées sont enregistrées et **en ce que** la représentation des options (On) et/ou la fourniture des données (D) sont réalisées en fonction de ces valeurs enregistrées (Wn).

9. Procédé selon une des revendications 1 à 8, **caractérisé en ce que** les données (D) sont traitées et transmises à d'autres systèmes, en particulier des systèmes d'assistance dans le véhicule.

10. Procédé selon une des revendications 1 à 9, **caractérisé en ce qu'**au moins une partie d'un mode d'emploi du véhicule est représentée en tant qu'information (I) sur le véhicule.

11. Dispositif destiné à fournir des données (D) sur une information (I) d'un véhicule (1) pour un utilisateur, comprenant
a) une unité de traitement (3), qui génère à l'aide d'au moins un profil prédéfini dépendant du contexte (P) un nombre d'options (On) **caractérisé par** le profil (P),
b) des moyens (4) d'affichage des options (On) dépendantes du profil pour l'information (I),
c) des moyens (6) de sélection par l'utilisateur d'au moins une option (On) dépendante du profil, et
d) des moyens (5) destinés à fournir en fonction du profil les données (D) concernant l'option (On) sélectionnée.

12. Dispositif selon la revendication 11, **caractérisé en ce qu'**il est prévu au moins une unité d'affichage (18, 19) pour sortir les données (D) en fonction d'un volume de données caractérisant celles-ci.

13. Dispositif selon la revendication 11 ou 12, **caractérisé en ce que** les moyens pour la sélection (6) sont réalisés sous forme d'une commande vocale.

14. Dispositif selon une des revendications 11 à 13, **caractérisé en ce que** les moyens pour la sélection (6) sont réalisés sous forme d'un élément de commande manuelle.

15. Dispositif selon une des revendications 11 à 14, **caractérisé en ce qu'**il est prévu des moyens pour une sortie acoustique des options (On) et/ou des données (D).
